# EUROPEAN PATENT APPLICATION

(11) **EP 4 458 522 A1**
(43) Date of publication of application: **06.11.2024**
(21) Application number: 23170904.9
(22) Date of filing: 01.05.2023
(51) Int. Cl.: B25J 9/16, B25J 13/08

(54) **REDUNDANT ACCELEROMETER SENSOR SYSTEM FOR ABSOLUTE MOVEMENT AND ORIENTATION DETERMINATION OF A ROBOTIC ARM**

(71) Applicant: Kassow Robots ApS, 2770 Kastrup (DK)
(72) Inventor: KASSOW, Kristian, 2300 Copenhagen S (DK)
(74) Representative: COPA Copenhagen Patents

(57) **Abstract**

The present disclosure relates to a robot comprising a robotic arm extending between a base end and a tool end and comprising a base at the base end and a plurality of joints including a first joint, a second joint and a third joint. The robotic arm comprises a plurality of accelerometers including a first accelerometer and a second accelerometer. The plurality of accelerometers being positioned between the base end and a third joint of the robotic arm. The first accelerometer generating a first accelerometer signal indicative of acceleration sensed by the first accelerometer and the second accelerometer generating a second accelerometer signal indicative of acceleration sensed by the second accelerometer. The robot further comprises a first processing unit receiving the first accelerometer signal, and wherein the first processing unit determines orientation and/or acceleration of the base based on the first accelerometer signal.

## Description

The present disclosure relates to a robot, e.g. a robotic arm and/or a control unit for such robot or robotic arm. More particularly, the present disclosure relates to an improved robot and/or a control unit.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is desirous to enhance flexibility and facilitate more compact robot solutions. It is a further objective to increase productivity, e.g. by utilizing such robots in performing various tasks and/or by changing between different tasks.

### SUMMARY

It is an object of the present disclosure at least to provide improvements of the prior art and/or to solve or reduce problems known from the prior art. It is a further object of the present disclosure to provide an advantageous or at least alternative robot, robotic assembly, and/or components thereof.

More particularly, the present disclosure provides a solution which provides enhanced flexibility, at least in terms of enhancing mobility of the robot. For example, the present disclosure may facilitate a robot forming part of an automated guided vehicle (AGV) and/or an autonomous mobile robot (AMR).

Furthermore, the present solution also aids an operator in setting up the robot, which saves costs and reduces the risk of a faulty setup.

Accordingly, a robot is disclosed. The robot comprises a robotic arm extending between a base end and a tool end. The robotic arm comprises a base at the base end. The robotic arm may be configured for coupling with a tool at the tool end. For example, the robotic arm may comprise a tool flange, e.g. for connecting the tool, at the tool end.

The robotic arm comprises a plurality of joints connecting the base and the tool end. The plurality of joints includes a first joint, a second joint and a third joint, and optionally one or more of a fourth joint, a fifth joint, a sixth joint and a seventh joint.

The first joint is positioned between the base and the second joint. The second joint is positioned between the first joint and the third joint. The third joint may be positioned between the second joint and the fourth joint. The fourth joint may be positioned between the third joint and the fifth joint. The fifth joint may be positioned between the fourth joint and the sixth joint. The sixth joint may be positioned between the fifth joint and the seventh joint. The seventh joint may be positioned between the sixth joint and the tool end, such as between the sixth joint and the tool flange at the tool end.

The robotic arm comprises a plurality of motors to cause movement of the robotic arm with respect to a plurality of axes. The plurality of motors includes a first motor, a second motor and a third motor, and optionally one or more of a fourth motor, a fifth motor, a sixth motor and a seventh motor.

The first motor causes movement of the first joint with respect to a first axis. The second motor causes movement of the second joint with respect to a second axis. The third motor causes movement of the third joint with respect to a third axis. The fourth motor may cause movement of the fourth joint with respect to a fourth axis. The fifth motor may cause movement of the fifth joint with respect to a fifth axis. The sixth motor may cause movement of the sixth joint with respect to a sixth axis. The seventh motor may cause movement of the seventh joint with respect to a seventh axis.

Also, a control unit for a robot, such as the above-mentioned robot, comprising a robotic arm is disclosed. The control unit may be adapted to be arranged at the base end of the robotic arm. For example, the control unit may be adapted to form part of the base of the robotic arm. The control unit may be adapted to be arranged between the robotic arm and a structure to which the robotic arm is to be fastened. The structure may be a factory floor or another structure from which the robotic arm is meant to work from. The robot as disclosed above may comprise the control unit. For example, the robot as disclosed may comprise the control unit being arranged at the base end of the robotic arm, thereby forming part of the base of the robotic arm.

The robotic arm comprises a plurality of accelerometers including a first accelerometer and a second accelerometer. The plurality of accelerometers may be positioned between the base end and the third joint. Alternatively or additionally, the control unit may comprise the plurality of accelerometers. Hence, the robotic arm may comprise the plurality of accelerometers, by arrangement of the control unit at the base end of the robotic arm.

The first accelerometer generates a first accelerometer signal indicative of acceleration sensed by the first accelerometer. The second accelerometer generates a second accelerometer signal indicative of acceleration sensed by the second accelerometer.

The robot further comprises a first processing unit. The control unit may comprise the first processing unit. The first processing unit receives the first accelerometer signal. The first processing unit determines orientation and/or acceleration of the base based on the first accelerometer signal.

With the improvement towards mobile robotic solutions, where a robot, such as the disclosed robot, may be transferred between positions and attain different orientations, it is becoming increasingly difficult to setup a robot for operation in such changing situations. The setup becomes even more challenging if the robot is supposed to operate while being moved, e.g. by an AGV or AMR, especially if such movement involves accelerations and/or different inclinations relative to gravity.

Specifically, the robot must know in what directions it is to expect to work against gravity and in which directions it is expected to work perpendicular to gravity. This is of particular importance when considering collaborative robots, which are supposed to work alongside human operators. In such situations it is of outmost importance that the robot is able to detect whether it is operating against gravity or is operating against an undesired external obstacle, which in a severe example, may be a person.

The present inventor has realised these challenges and found some simple solutions in accordance with the present disclosure to enable the robot to automatically and/or continuously determine necessary characteristics allowing safe operation of the robot, even if orientation and/or position of the robot is changing.

Furthermore, the present solution also may aid an operator in setting up a robot, even if being fixedly installed, as the automated determining of certain characteristics, removes or reduces the necessity for manually inputting those characteristics. Thereby, the present solution may save costs and reduce the risk of a faulty setup.

The second accelerometer signal may be used to redundantly determine the orientation and/or acceleration of the base so as to ensure that the determined orientation and/or acceleration is correct.

The first processing unit may receive the second accelerometer signal. The first processing unit may determine orientation and/or acceleration of the base based on the second accelerometer signal. Alternatively or additionally, the robot may comprise a plurality of processing units including the first processing unit and a second processing unit. The second processing unit may receive the second accelerometer signal. The second processing unit may determine orientation and/or acceleration of the base based on the second accelerometer signal. The control unit may comprise the second processing unit.

The first processing unit and/or the second processing unit may be adapted to compare the determined orientation and/or acceleration of the base based on the first accelerometer signal with the determined orientation and/or acceleration of the base based on the second accelerometer signal. In accordance with the comparison revealing that the determined orientations and/or accelerations of the base differ by more than a differing threshold, the first processing unit and/or the second processing unit may effectuate one or more safety functions of the robot. For example, the first processing unit and/or the second processing unit may cause one or more or all of the plurality of motors to stop. Alternatively or additionally, the first processing unit and/or the second processing unit may cause issuance of a warning (e.g. audible or visually) and/or slowing down movement of one or more or all of the plurality of motors.

The plurality of accelerometers may be positioned between the base end and the second joint, such as between the base end and the first joint. In a preferred example, the base comprises the plurality of accelerometers. For example, the control unit may comprise the plurality of accelerometers. By positioning the plurality of accelerometers close to the base or as part of the base, the calculations necessary to determine the orientation and/or acceleration of the base is simplified.

The control unit and/or the robot, such as the robotic arm of the robot, may comprise one or more gyroscopes. The one or more gyroscopes may include a first gyroscope. The first gyroscope may generate a first gyroscope signal indicative of angular movement sensed by the first gyroscope. The first processing unit may receive the first gyroscope signal. The first processing unit may determine angular velocity and/or angular acceleration of the base based on the first gyroscope signal. By including one or more gyroscopes more detailed information about the state of the robotic arm may be obtained and used in operating the robotic arm in various positions or while being moved by an AGV/AMR. It is especially advantageous to include both accelerometers and gyroscopes, as some situations, influencing forces and moments experienced by the robotic arms and its elements, may be sensed by the accelerometers but not the gyroscopes, while other situations may be sensed by the gyroscopes but not the accelerometers.

The one or more gyroscopes may include a second gyroscope. The second gyroscope may generate a second gyroscope signal indicative of angular movement sensed by the second gyroscope. The second gyroscope signal may be used to redundantly determine the angular velocity and/or angular acceleration of the base, so as to ensure that the determined angular velocity and/or angular acceleration is correct.

The first processing unit may receive the second gyroscope signal. The first processing unit may determine angular velocity and/or angular acceleration of the base based on the second gyroscope signal. Alternatively or additionally, the second processing unit may receive the second gyroscope signal. The second processing unit may determine angular velocity and/or angular acceleration of the base based on the second gyroscope signal.

The first processing unit and/or the second processing unit may be adapted to compare the determined angular velocity and/or angular acceleration of the base based on the first gyroscope signal with the determined angular velocity and/or angular acceleration of the base based on the second gyroscope signal. In accordance with the comparison revealing that the determined angular velocities and/or angular accelerations of the base differ by more than a differing threshold, the first processing unit and/or the second processing unit may effectuate one or more safety functions of the robot. For example, the first processing unit and/or the second processing unit may cause one or more or all of the plurality of motors to stop. Alternatively or additionally, the first processing unit and/or the second processing unit may cause issuance of a warning (e.g. audible or visually) and/or slowing down movement of one or more or all of the plurality of motors.

The one or more gyroscopes may be positioned between the base end and the third joint, such as between the base end and the second joint, such as between the base end and the first joint. In a preferred example, the base comprises the one or more gyroscopes. For example, the control unit may comprise the plurality of gyroscopes. By positioning the one or more gyroscopes close to the base or as part of the base, the calculations necessary to determine the angular velocity and/or angular acceleration of the base may be simplified.

The robot and/or the control unit, such as one or more processing units of the robot and/or of the control unit, may be adapted to determine one or more operational parameters for the plurality of motors. For example, so as to let the robotic arm perform a desired movement or task. The one or more operational parameters may, for example, include torque, angular velocity and/or angular acceleration for each of the plurality of motors. The determination of the one or more operational parameters for the plurality of motors may be based on the determined orientation and/or acceleration of the base and/or based on the determined angular velocity and/or angular acceleration of the base. Thereby, the movement of the robotic arm, e.g. the movement of the tool end of the robotic arm, may be adapted to account for movement or changing orientations of the base of the robotic arm. The one or more processing units adapted to determine the one or more operational parameters may include the first processing unit and/or the second processing unit. In some examples, the one or more processing units adapted to determine the one or more operational parameters may be the first processing unit and/or the second processing unit. However, in other examples, the one or more processing units adapted to determine the one or more operational parameters may be one or more processing units different from the first processing unit and/or different from the second processing unit.

The first processing unit may be adapted to control one of the plurality of motors, for example, the first motor, e.g. in accordance with the determined one or more operational parameters. The second processing unit may be adapted to control another of the plurality of motors, for example, the second motor, e.g. in accordance with the determined one or more operational parameters.

The robot and/or the control unit may comprise an I/O board. The I/O board may comprise the first processing unit and/or the second processing unit. The I/O board may be at the base. Alternatively, the I/O board comprising the first processing unit and/or the second processing unit may be part of an external control unit of the robot, which may be external to the robotic arm.

The base may comprise the first processing unit and/or the second processing unit. For example, the control unit may comprise the first processing unit and/or the second processing unt. For example, the base and/or the control unit may comprise the I/O board comprising the first processing unit and/or the second processing unit.

The first processing unit and/or the second processing unit may be positioned between the first joint and the third joint. For example, the first processing unit and/or the second processing unit may be positioned between the first joint and the second joint. Alternatively, the first processing unit and/or the second processing unit may be positioned between the second joint and the third joint.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating part of an exemplary robotic arm, and
Fig. 3 is a schematic block diagram illustrating some components of an exemplary robot.

### DETAILED DESCRIPTION

Various exemplary embodiments and details are described hereinafter with reference to the figures, when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

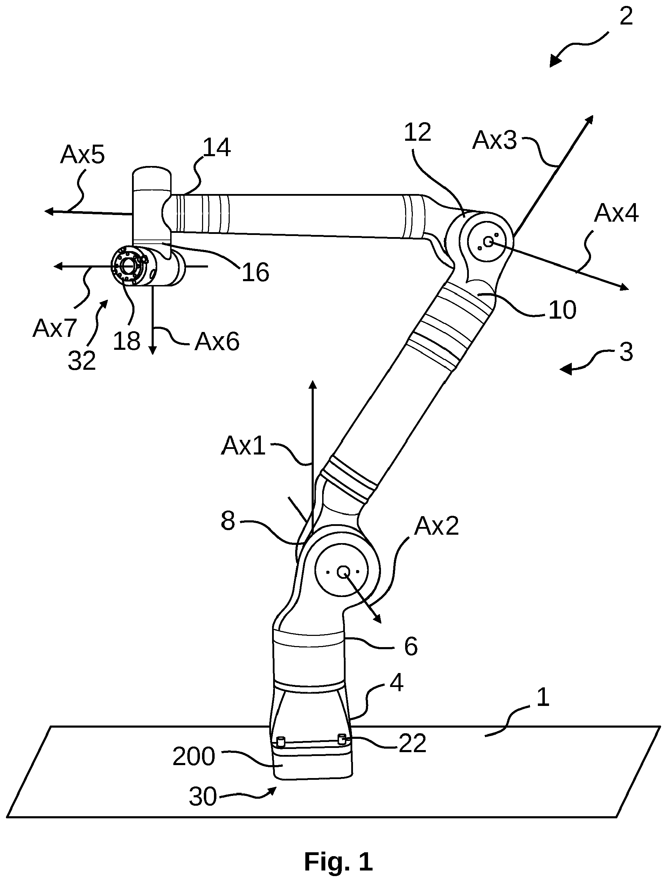

Fig. 1 is a schematic diagram illustrating an exemplary robot 2, which in the present example comprises a robotic arm 3, more particularly, a seven-axis robotic arm.

The robotic arm 3 extends between a base end 30 and a tool end 32 and comprising a base 4 at the base end 30. A tool flange for connection with a tool may preferably be arranged at the tool end 32 of the robotic arm. The robotic arm 3 further comprises a plurality of joints 6, 8, 10, 12, 14, 16, 18. The plurality of joints 6, 8, 10, 12, 14, 16, 18 connects the base 4 and the tool end 32. In the illustrated example, the plurality of joints are seven joints, i.e. including a first joint 6, a second joint 8, a third joint 10, a fourth joint 12, a fifth joint 14, a sixth joint 16 and a seventh joint 18. However, in other examples, the robotic arm may comprise fewer or more joints. For example, the robotic arm 3 may, in another configuration, comprise only three joints, such as the first, second and third joints 6, 8, 10.

The first joint 6 is positioned between the base 4 and the second joint 8. The second joint 8 is positioned between the first joint 6 and the third joint 10. The third joint 10 is positioned between the second joint 8 and the fourth joint 12. The fourth joint 12 is positioned between the third joint 10 and the fifth joint 14. The fifth joint 14 is positioned between the fourth joint 12 and the sixth joint 16. The sixth joint 16 is positioned between the fifth joint 14 and the seventh joint 18. The seventh joint 18 is positioned between the sixth joint 16 and the tool end 32.

The plurality of joints 6, 8, 10, 12, 14, 16, 18 cause movement of the robotic arm 3, e.g. movement of the tool end 32 relative to the base end 30. Each joint provides for rotation about a respective axis. The first joint 6 provides for rotation about a first axis Ax1. The second joint 8 provides for rotation about a second axis Ax2. The third joint 10 provides for rotation about a third axis Ax3. The fourth joint 12 provides for rotation about a fourth axis Ax4. The fifth joint 14 provides for rotation about a fifth axis Ax5. The sixth joint 16 provides for rotation about a sixth axis Ax6. The seventh joint 18 provides for rotation about a seventh axis Ax7.

The robotic arm 3 may be put in some configurations, where none of the seven axes Ax1-Ax7 are parallel. However, in some other configurations two or more of the seven axes Ax1-Ax7 may be parallel. As illustrated, the second axis Ax2 may be non-parallel with the first axis Ax1. The third axis Ax3 may be non-parallel with the second axis Ax2. The fourth axis Ax4 may be non-parallel with the third axis Ax3. The fifth axis Ax5 may be non-parallel with the fourth axis Ax4. The sixth axis Ax6 may be non-parallel with the fifth axis Ax5. The seventh axis Ax7 may be non-parallel with the sixth axis Ax6.

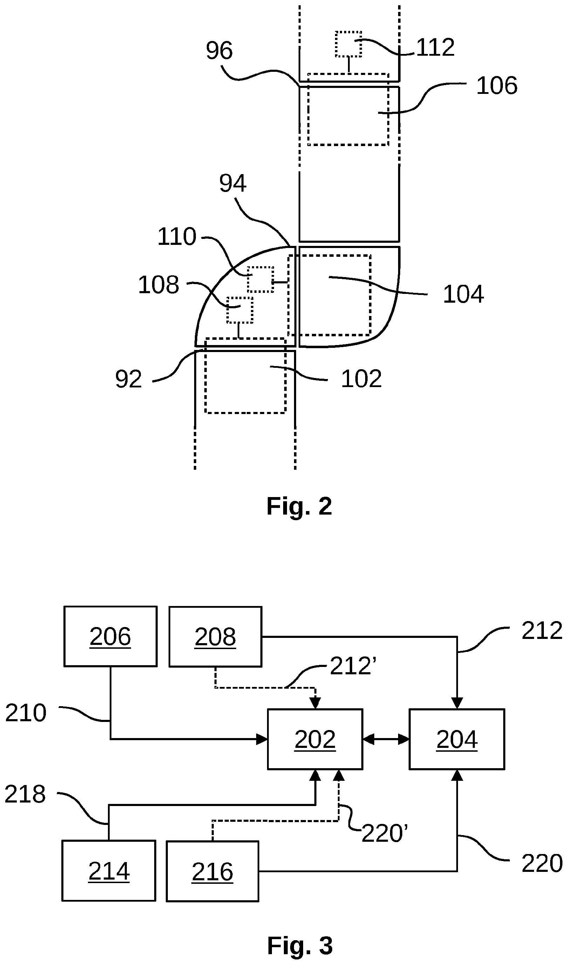

The robotic arm may comprise a plurality of motors as described in more detail relation to Fig. 2, e.g. including a motor for each of the plurality of joints 6, 8, 10, 12, 14, 16, 18. Each of the plurality of motors may cause movement of a respective joint of the plurality of joints 6, 8, 10, 12, 14, 16, 18. For example, a first motor may cause movement of the first joint 6 with respect to the first axis Ax1. A second motor may cause movement of the second joint 8 with respect to the second axis Ax2. A third motor may cause movement of the third joint 10 with respect to the third axis Ax3. And so forth.

The robotic arm 3 is fastened at the base end 30 to a structure 1, which may be a factory floor or another structure from which the robotic arm 3 is meant to work from. In some examples, the structure 1 may be part of a movable unit, such as a mobile robot or a vehicle, which would allow the robot 2 or at least the robotic arm 3 to be moved between different positions. The robotic arm 3 may be fastened to the structure 1 by fastening bolts 22.

The robot 2, as illustrated, further comprises a control unit 200, which in the present example may form an integral part of the base 4 of the robotic arm 3 or may be adapted to be arranged between the base 4 and the structure 1. Alternatively, the control unit 200 may be provided as an additional unit. Thus, in some examples the control unit 200 may be provided as an external control unit to control the robotic arm 3.

Although being described in relation to a robotic arm 3 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes.

Fig. 2 is a schematic diagram illustrating three exemplary joints 92, 94, 96, e.g. a primary joint 92, a secondary joint 94 and a tertiary joint 94. The exemplary joints 92, 94, 96 may be three successive joints of the plurality of joints 6, 8, 10, 12, 14, 16, 18 indicated in Fig. 1. For example, the primary joint 92 may be the first joint 6 of Fig. 1, the secondary joint 94 may be the second joint 8 of Fig. 1, and the tertiary joint 96 may be the third joint 10 of Fig. 1.

Also illustrated is a primary motor 102 is provided to rotate the primary joint 92. A secondary motor 104 is provided to rotate the secondary joint 94. A tertiary motor 106 is provided to rotate the tertiary joint 96. Thus, the primary motor 102 may be a first motor for causing movement of the first joint 6 with respect to the first axis Ax1 of Fig. 1. The secondary motor 104 may be a second motor for causing movement of the second joint 8 with respect to the second axis Ax2 of Fig. 1. The tertiary motor 106 may be a third motor for causing movement of the third joint 10 with respect to the third axis Ax3 of Fig. 1. The primary motor 102, the secondary motor 104, and/or the tertiary motor 106 may be a permanent magnet AC motor. Furthermore, the primary motor 102, the secondary motor 104, and/or the tertiary motor 106 may comprise a gear assembly, e.g. an integral gear, such as a strain wave gear. Hence, the primary motor 102, the secondary motor 104, and/or the tertiary motor 106 may be a gear motor.

One or more processing units 108, 110, 112 may be provided and adapted to control the motors 102, 104, 106. A primary processing unit 108 may be adapted to control the primary motor 102. A secondary processing unit 110 may be adapted to control the secondary motor 104. A tertiary processing unit 112 may be adapted to control the tertiary motor 106.

Some of the processing units, for example the primary processing unit 108 and the secondary processing unit 110, may be provided as part of a single circuitry, e.g. a PCB. However, in other examples, each of the processing units may be provided as part of respective separate circuitries.

Fig. 3 is a schematic block diagram illustrating some components of an exemplary robot, such as the robot 2 as illustrated in Fig. 1. The illustration shows two exemplary processing units 202, 204, respectively, a first processing unit 202 and a second processing unit 204. The first processing unit 202 may be the primary processing unit 108 of Fig. 2 and the second processing unit 204 may be the secondary processing unit 110 of Fig. 2. However, the first processing unit 202 may be any processing unit of the robot and the second processing unit 204 may be any other processing unit of the robot. In a preferred example, the first processing unit 202 and/or the second processing unit 204 are part of the base 4. For example, the first processing unit 202 and/or the second processing unit 204 may form part of an I/O board, which may be arranged as part of the base 4.

The robot, e.g. the robotic arm of the robot, comprises a plurality of accelerometers 206, 208. For example, a first accelerometer 206 and a second accelerometer 208, as illustrated. With reference to Fig. 1, the accelerometers 206, 208 may be positioned at the proximal part of the robotic arm 3, such as between the base end 30 and the third joint 12 of the robotic arm 3, such as between the base end 30 and the second joint 10 of the robotic arm 3, such as between the base end 30 and the first joint of the robotic arm 3. For example, the accelerometers 206, 208 may form part of the base 4 of the robotic arm 3, e.g. as part of the control unit 200. Preferably, the accelerometers 206, 208 are located within the same rigid part of the robot.

The first accelerometer 206 generates a first accelerometer signal 210 indicative of acceleration sensed by the first accelerometer 206. The second accelerometer 208 generates a second accelerometer signal 212/212' indicative of acceleration sensed by the second accelerometer 208.

In some examples, the accelerometers 206, 208 may be mounted in a suspension e.g. a rubber suspension, to reduce undesired influence on the accelerometer sensing by external vibrations or similar.

The first processing unit 202 receives the first accelerometer signal 210. Based on the first accelerometer signal 210, the first processing unit 202 may determine orientation, e.g. in relation to gravity, and/or acceleration of the base 4 of the robotic arm. Thereby, the robot can take into account external influences when calculating and affirming its movement. Thereby, if being moved from one position where the base 4 is angled relative to horizontal by a first angle to a second different position where the base 4 is angled relative to horizontal by a second angle, the robot may itself determine its orientation and take this orientation into account during operation. Measuring acceleration may further allow operation of the robot while being moved. For example, one or more processing units, such as the first processing unit 202 and/or the second processing unit 204, may be adapted to determine operational parameters (e.g. torque, angular velocity, angular acceleration etc.) for the plurality of motors, such as to let the robotic arm perform a desired movement or task. This determination may further be based on the determined orientation and/or acceleration of the base 4 of the robotic arm, to thereby account for movement or changing orientations of the base of the robotic arm.

The second processing unit 204 receives the second accelerometer signal 212. Based on the second accelerometer signal 212, the second processing unit 204 may determine orientation, e.g. in relation to gravity, and/or acceleration of the base 4 of the robotic arm. Thus, the second processing unit 204 may determine orientation and/or acceleration similar to the first processing unit 202 but based on a different accelerometer signal. Thereby, the orientation and/or acceleration of the base 4 may be determined redundantly providing for a more reliable determination of the orientation and/or acceleration of the base 4. Alternatively, or additionally, the first processing unit 202 may receive the second accelerometer signal 212' from the second accelerometer 208 (as indicated by the dashed arrow). Accordingly, the first processing unit 202 itself may perform a redundant determination of the orientation and/or acceleration of the base 4 based on two independent accelerometer signals. In some examples it may be sufficient to perform the redundant determination by the same processing unit based on two independent accelerometer signals. However, it provides an extra amount of independence of the redundant determination of the orientation and/or acceleration of the base 4, and thereby an enhanced level of redundancy, if the determinations are also performed independently by two processing units, namely the first processing unit 202 and the second processing unit 204. In some examples, the two processing units 202, 204 may be two processor cores of the same chip. However, in other examples, the two processing units 202, 204 may be separate chips.

The determined orientation and/or acceleration of the base 4 respectively based on the two accelerometer signals 210, 212/212' may be compared to verify the correctness of the determined orientation and/or acceleration. For example, in the example where the first processing unit 202 and the second processing unit 204 each determines the orientation and/or acceleration of the base 4 respectively based on the first accelerometer signal 210 and the second accelerometer signal 212, the first processing unit 202 and the second processing unit 204 are adapted to communicate and compare their determined orientation and/or acceleration of the base 4. In the example where the first processing unit 202 determines the orientation and/or acceleration of the base 4 based on each of the first accelerometer signal 210 and the second accelerometer signal 212', the first processing unit 202 may also perform a comparison between the two determined orientations and/or accelerations of the base 4. If the comparison, e.g. performed by either of the first or second processing units 202, 204, in any of the two examples described, reveals that the determined orientations and/or accelerations of the base 4 differ by more than a differing threshold, the first processing unit 202 and/or the second processing unit 204 may effectuate one or more safety functions of the robot. For example, the first processing unit 202 and/or the second processing unit 204 may cause one or more or all of the motors of the robot to stop. Alternatively or additionally, the first processing unit 202 and/or the second processing unit 204 may cause issuance of a warning (e.g. audible or visually), slowing down movement of the robot etc.

In some examples, the robot, e.g. the robotic arm of the robot, may comprise a plurality of gyroscopes 214, 216, as also illustrated in Fig. 3. For example, a first gyroscope 214 and a second gyroscope 216, as illustrated. With reference to Fig. 1, the gyroscopes 214, 216 may be positioned at the proximal part of the robotic arm 3, such as between the base end 30 and the third joint 12 of the robotic arm 3, such as between the base end 30 and the second joint 10 of the robotic arm 3, such as between the base end 30 and the first joint of the robotic arm 3. For example, the gyroscopes 214, 216 may form part of the base 4 of the robotic arm 3, e.g. as part of the control unit 200. Preferably, the gyroscopes 214, 216 are located within the same rigid part of the robot. The gyroscopes 214, 216 may, preferably, be located within the same rigid part of the robot as the accelerometers 206, 208, e.g. in the base 4.

The first gyroscope 214 generates a first gyroscope signal 218 indicative of angular movement sensed by the first gyroscope 214. The second gyroscope 216 generates a second gyroscope signal 220/220' indicative of angular movement sensed by the second gyroscope 216.

In some examples, the gyroscopes 214, 218 may be mounted in a suspension e.g. a rubber suspension, to reduce undesired influence on the angular movement sensing by external vibrations or similar.

The first processing unit 202 receives the first gyroscope signal 218. Based on the first gyroscope signal 218, the first processing unit 202 may determine angular velocity and/or angular acceleration of the base 4. Thereby, the robot can take into account, not only changes with respect to gravity and/or changing movements of the robotic arm, when considering external influences in calculating and/or affirming the movements of the robotic arm, but also angular movements. Thereby, determination of the movement and/or orientation of the robotic arm relative to the environment may be more accurately determined, reducing situations where operation of the robotic arm must be halted.

The second processing unit 204 receives the second gyroscope signal 220. Based on the second gyroscope signal 218, the second processing unit 204 may determine angular velocity and/or angular acceleration of the base 4 of the robotic arm 3. Thus, the second processing unit 204 may determine angular velocity and/or angular acceleration similar to the first processing unit 202 but based on a different gyroscope signal. Thereby, as also explained in relation to the determination of the orientation and/or acceleration of the base 4, the angular velocity and/or angular acceleration may be determined redundantly providing for a more reliable determination. Alternatively, or additionally, the first processing unit 202 may receive the second gyroscope signal 220' from the second gyroscope 216 (as indicated by the dashed arrow). Accordingly, the first processing unit 202 itself may perform a redundant determination of the angular velocity and/or angular acceleration of the base 4 based on two independent gyroscope signals.

Like for the determined orientation and/or acceleration of the base 4, as described above, the determined angular velocity and/or angular acceleration of the base 4 respectively based on the two gyroscope signals 218, 220/220' may be compared to verify the correctness of the determined angular velocity and/or angular acceleration. For example, the first processing unit 202 and/or the second processing unit 204 may be adapted to compare the determined angular velocities and/or angular accelerations of the base 4 based, respectively, on the first gyroscope signal 218 and the second gyroscope signal 220/220'. If the comparison, e.g. performed by either of the first or second processing units 202, 204, reveals that the determined angular velocity and/or angular acceleration of the base 4 differ by more than a differing threshold, the first processing unit 202 and/or the second processing unit 204 may effectuate one or more safety functions of the robot. For example, the first processing unit 202 and/or the second processing unit 204 may cause one or more or all of the motors of the robot to stop. Alternatively or additionally, the first processing unit 202 and/or the second processing unit 204 may cause issuance of a warning (e.g. audible or visually), slowing down movement of the robot etc.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: robot
- 3: robotic arm
- 4: base
- 6: first joint
- 8: second joint
- 10: third joint
- 12: fourth joint
- 14: fifth joint
- 16: sixth joint
- 18: seventh joint
- 22: fastening bolts
- 92: primary joint
- 94: secondary joint
- 96: tertiary joint
- 102: primary motor
- 104: secondary motor
- 106: tertiary motor
- 108: primary processing unit
- 110: secondary processing unit
- 112: tertiary processing unit
- 200: control unit
- 202: first processing unit
- 204: second processing unit
- 206: first accelerometer
- 208: second accelerometer
- 210: first accelerometer signal
- 212/212': second accelerometer signal
- 214: first gyroscope
- 216: second gyroscope
- 218: first gyroscope signal
- 220/220': second gyroscope signal
- Ax1: first axis
- Ax2: second axis
- Ax3: third axis
- Ax4: fourth axis
- Ax5: fifth axis
- Ax6: sixth axis
- Ax7: seventh axis

## Claims

1. A robot comprising a robotic arm extending between a base end and a tool end and comprising a base at the base end and a plurality of joints including a first joint, a second joint and a third joint, the plurality of joints connecting the base and the tool end, the first joint being positioned between the base and the second joint, the second joint being positioned between the first joint and the third joint,
the robotic arm comprising a plurality of motors including a first motor, a second motor and a third motor, the plurality of motors cause movement of the robotic arm with respect to a plurality of axes, the first motor causes movement of the first joint with respect to a first axis, the second motor causes movement of the second joint with respect to a second axis, and the third motor causes movement of the third joint with respect to a third axis,
the robotic arm comprising a plurality of accelerometers including a first accelerometer and a second accelerometer, the plurality of accelerometers being positioned between the base end and the third joint, the first accelerometer generating a first accelerometer signal indicative of acceleration sensed by the first accelerometer and the second accelerometer generating a second accelerometer signal indicative of acceleration sensed by the second accelerometer,
the robot further comprising a first processing unit receiving the first accelerometer signal, and wherein the first processing unit determines orientation and/or acceleration of the base based on the first accelerometer signal.

2. Robot according to claim 1 further comprising a second processing unit receiving the second accelerometer signal, and wherein the second processing unit determines orientation and/or acceleration of the base based on the second accelerometer signal.

3. Robot according to any of the preceding claims, wherein the first processing unit receives the second accelerometer signal, and wherein the first processing unit determines orientation and/or acceleration of the base based on the second accelerometer signal.

4. Robot according to any of claims 2-3, wherein the first processing unit and/or the second processing unit are adapted to compare the determined orientation and/or acceleration of the base based on the first accelerometer signal with the determined orientation and/or acceleration of the base based on the second accelerometer signal, and wherein, in accordance with the comparison revealing that the determined orientations and/or accelerations of the base differ by more than a differing threshold, the first processing unit and/or the second processing unit causes the plurality of motors to stop.

5. Robot according to any of the preceding claims, wherein the plurality of accelerometers is positioned between the base end and the second joint, such as between the base end and the first joint.

6. Robot according to any of the preceding claims, wherein the base comprises the plurality of accelerometers.

7. Robot according to any of the preceding claims comprising one or more gyroscopes including a first gyroscope generating a first gyroscope signal indicative of angular movement sensed by the first gyroscope, wherein the one or more gyroscopes is positioned between the base end and the third joint, such as between the base end and the second joint, such as between the base end and the first joint, e.g. wherein the base comprises the one or more gyroscopes,
wherein the first processing unit receives the first gyroscope signal, and wherein the first processing unit determines angular velocity and/or angular acceleration of the base based on the first gyroscope signal.

8. Robot according to claim 7, wherein the one or more gyroscopes includes a second gyroscope generating a second gyroscope signal indicative of angular movement sensed by the second gyroscope.

9. Robot according to claim 8, wherein the first processing unit receives the second gyroscope signal, and wherein the first processing unit determines angular velocity and/or angular acceleration of the base based on the second gyroscope signal.

10. Robot according to any of claims 8-9 as dependent on claim 2, wherein the second processing unit receives the second gyroscope signal, and wherein the second processing unit determines angular velocity and/or angular acceleration of the base based on the second gyroscope signal.

11. Robot according to any of claims 9-10, wherein the first processing unit and/or the second processing unit are adapted to compare the determined angular velocity and/or angular acceleration of the base based on the first gyroscope signal with the determined angular velocity and/or angular acceleration of the base based on the second gyroscope signal, and wherein, in accordance with the comparison revealing that the determined angular velocities and/or angular accelerations of the base differ by more than a differing threshold, the first processing unit and/or the second processing unit causes the plurality of motors to stop.

12. Robot according to any of the preceding claims, wherein a processing unit, such as the first processing unit and/or the second processing unit, is adapted to determine one or more operational parameters for the plurality of motors based on the determined orientation and/or acceleration of the base and/or based on the determined angular velocity and/or angular acceleration of the base.

13. Robot according to any of the preceding claims, wherein the first processing unit is adapted to control the first motor and/or wherein the second processing unit is adapted to control the second motor.

14. Robot according to any of the preceding claims, wherein the base comprises the first processing unit and/or the second processing unit, or wherein the first processing unit and/or the second processing unit is positioned between the first joint and the third joint, such as between the first joint and the second joint or between the second joint and the third joint.

15. A control unit for a robot comprising a robotic arm extending between a base end and a tool end, the control unit being adapted be arranged at the base end of the robotic arm to form part of a base of the robotic arm,
the control unit comprising a plurality of accelerometers including a first accelerometer and a second accelerometer, the first accelerometer generates a first accelerometer signal indicative of acceleration sensed by the first accelerometer and the second accelerometer generates a second accelerometer signal indicative of acceleration sensed by the second accelerometer,
the control unit further comprising a first processing unit receiving the first accelerometer signal, and wherein the first processing unit determines orientation and/or acceleration of the base of the robotic arm based on the first accelerometer signal.
